(19) **Europäisches Patentamt**
**European Patent Office**
**Office européen des brevets**

(11) **EP 4 676 137 A1**

(12) **EUROPEAN PATENT APPLICATION**
published in accordance with Art. 153(4) EPC

(43) Date of publication:
**07.01.2026 Bulletin 2026/02**

(21) Application number: **24773811.5**

(22) Date of filing: **01.02.2024**

(51) International Patent Classification (IPC):
*H04W 64/00* (2009.01)

(52) Cooperative Patent Classification (CPC):
**H04W 4/02; H04W 64/00**

(86) International application number:
**PCT/CN2024/075121**

(87) International publication number:
**WO 2024/193242 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.03.2023 CN 202310296316
04.04.2023 CN 202310389602
12.05.2023 CN 202310541796**

(71) Applicant: **HUAWEI TECHNOLOGIES CO., LTD.
Shenzhen, Guangdong 518129 (CN)**

(72) Inventors:
• LI, Jun
  Shenzhen, Guangdong 518129 (CN)
• LI, Chao
  Shenzhen, Guangdong 518129 (CN)
• ZHANG, Mengchen
  Shenzhen, Guangdong 518129 (CN)

(74) Representative: **Isarpatent
Patent- und Rechtsanwälte
Barth Hassa Peckmann & Partner mbB
Friedrichstraße 31
80801 München (DE)**

(54) **METHOD AND APPARATUS FOR POSITIONING**

(57)    This application provides a method for positioning. The method includes: A first device sends request information and indication information to a second device, where the request information is used for requesting the second device to report a first measurement quantity, the first measurement quantity is used for determining a distance between the first device and the second device, and the indication information indicates that a first positioning reference signal is associated with a second positioning reference signal. The first device receives a response message from the second device, where the response message includes information about the first measurement quantity, an identifier of the first positioning reference signal, and an identifier of the second positioning reference signal, and the first measurement quantity is a measurement quantity obtained by the second device by measuring the first positioning reference signal and the second positioning reference signal.

FIG. 6

## Description

This application claims priority to Chinese Patent Application No. 202310296316.9, filed with the China National Intellectual Property Administration on March 17, 2023, and entitled "SIDELINK POSITIONING MEASUREMENT REQUEST METHOD AND DEVICE", to Chinese Patent Application No. 202310389602.X, filed with the China National Intellectual Property Administration on April 4, 2023, and entitled "METHOD FOR POSITIONING AND APPARATUS", and to Chinese Patent Application No. 202310541796.0, filed with the China National Intellectual Property Administration on May 12, 2023, and entitled "METHOD FOR POSITIONING AND APPARATUS". The foregoing three applications are incorporated herein by reference in their entireties.

## TECHNICAL FIELD

This application relates to the communication field, and specifically, to a method for positioning and an apparatus.

## BACKGROUND

In a 5th generation (5th generation, 5G) mobile communication technology, standardization is being performed on sidelink (sidelink, SL) positioning. Currently, it has been decided in the standard to introduce a round-trip time (round-trip time, RTT) solution to implement positioning in an SL scenario.

A measurement quantity in an execution process of the RTT positioning solution in the SL communication scenario is different from a measurement quantity defined in a current 3rd generation partnership project (3rd Generation Partnership Project, 3GPP) air interface communication scenario. Specifically, the measurement quantity of an RTT positioning method defined in the 3GPP air interface communication scenario is a receiving-sending time difference, for example, receiving moment ($T_{UE-RX}$)-sending moment ($T_{UE-TX}$). $T_{UE-RX}$ is obtained by measuring a positioning reference signal (positioning reference signal, PRS), and $T_{UE-TX}$ is a sending subframe boundary closest to the measured PRS. In the SL communication scenario, the measurement quantity is modified, and $T_{UE-TX}$ is adjusted to actual sending time of the PRS.

## SUMMARY

When $T_{UE-TX}$ is adjusted to an actual moment of sending a PRS, a transmit end device requests a receive end device to measure a receiving-sending time difference based on a specific PRS, and the receive end device may feed back an association result between the PRS and a different PRS. Therefore, how to flexibly indicate a measurement requirement with a measurement quantity being modified becomes a technical problem to be urgently resolved.

To resolve the foregoing technical problem, this application provides a method for positioning. An initiator of positioning measurement may flexibly indicate a measurement requirement.

According to a first aspect, a method for positioning is provided. The method may be performed by a first device, or may be performed by a component (for example, a chip or a circuit) of the first device. This is not limited in this application. For ease of description, the following uses an example in which the method is performed by the first device for description.

The method for positioning includes: The first device sends a first message to a second device, where the first message includes request information and indication information, the request information is used for requesting the second device to report a first measurement quantity, the first measurement quantity is used for determining a distance between the first device and the second device, and the indication information indicates that a first positioning reference signal is associated with a second positioning reference signal; or the first device sends a second message and a third message to the second device, where the second message includes the request information, and the third message includes the indication information; and the first device receives a response message from the second device, where the response message includes first information, a first identifier, and a second identifier. The first information indicates the first measurement quantity, the first identifier is an identifier of the first positioning reference signal, the second identifier is an identifier of the second positioning reference signal, and the first measurement quantity is a measurement quantity obtained by the second device by measuring the first positioning reference signal and the second positioning reference signal.

Based on the foregoing technical solution, when initiating a measurement quantity reporting request (or after initiating a measurement quantity reporting request, or before initiating a measurement quantity reporting request), the first device may notify associated positioning reference signals by using the indication information, so that the second device may determine, based on the indication information, a measurement quantity required by the first device, perform measurement based on a measurement requirement of the first device, obtain and report the measurement quantity to the first device, thereby flexibly indicating the measurement requirement. The identifier may be a resource ID of a reference signal and/or timestamp information corresponding to the reference signal (for example, a slot and/or a symbol in which the reference signal is located). Details are not described below again.

With reference to the first aspect, in some implementations of the first aspect, the indication information includes the first identifier and the second identifier.

Based on the foregoing technical solution, the indication information may be in a form of explicitly carrying identifiers of the associated positioning reference signals, so that the second device can quickly learn of the associated positioning reference signals based on the identifiers of the positioning reference signals, and measure and report the positioning reference signal, thereby simplifying an operation of the second device.

With reference to the first aspect, in some implementations of the first aspect, the indication information includes information about a start moment of a time window and information about an end moment of the time window. The first positioning reference signal is one of at least one positioning reference signal received by the second device in the time window. The second positioning reference signal is one of at least one positioning reference signal sent by the second device in the time window.

Based on the foregoing technical solution, the indication information may be in a form of indicating a time window, so that the second device measures positioning reference signals received and sent in the time window and reports a measurement quantity. The indication information may not need to explicitly carry identifiers of the positioning reference signals. Therefore, when the first device has not learned the identifiers of the positioning reference signals, the indication information may also be used to flexibly indicate a measurement requirement.

With reference to the first aspect, in some implementations of the first aspect, the indication information includes the identifier of the first positioning reference signal and a bitmap. The bitmap includes a first bit, and the first bit corresponds to the second positioning reference signal. When the second positioning reference signal is associated with the first positioning reference signal, the first bit is a first value.

With reference to the first aspect, in some implementations of the first aspect, the bitmap further includes a second bit, the second bit corresponds to a third positioning reference signal, and the second bit indicates whether the third positioning reference signal is associated with the first positioning reference signal.

Based on the foregoing technical solution, the indication information may be in a form of including the identifier of the first positioning reference signal and the bitmap, and a relatively small quantity of bits are used to indicate an association relationship between the first positioning reference signal and a different positioning reference signal, so that a measurement requirement can be flexibly indicated while signaling overheads are reduced.

With reference to the first aspect, in some implementations of the first aspect, the request information is further used for requesting the second device to report a second measurement quantity, the second measurement quantity is used for determining the distance between the first device and the second device, and the second measurement quantity is a measurement quantity obtained by the second device by measuring a fourth positioning reference signal and a fifth positioning reference signal; and the indication information further indicates that the fourth positioning reference signal is associated with the fifth positioning reference signal.

With reference to the first aspect, in some implementations of the first aspect, the response message further includes second information, a third identifier, and a fourth identifier, the second information indicates the second measurement quantity, the third identifier is an identifier of the fourth positioning reference signal, the fourth identifier is an identifier of the fifth positioning reference signal, the first measurement quantity corresponds to the first identifier and the second identifier, and the second measurement quantity corresponds to the third identifier and the fourth identifier.

Based on the foregoing technical solution, the first device may request, by using the request information and the indication information, the second device to measure and report a plurality of measurement quantities. The technical solution may be applied to a double sided round-trip time (Double Sided Round-Trip Time, DS-RTT) positioning method.

With reference to the first aspect, in some implementations of the first aspect, the first measurement quantity is a time difference between a first moment and a second moment, or the first measurement quantity is a phase difference between a first phase and a second phase, where the first moment is a moment at which the second device receives the first positioning reference signal, the second moment is a moment at which the second device sends the second positioning reference signal, the first phase is a phase at which the second device receives the first positioning reference signal, and the second phase is a phase at which the second device sends the second positioning reference signal.

Based on the foregoing technical solution, the first measurement quantity may be a time difference or a phase difference, a specific form is not limited, and flexibility of the solution is improved.

With reference to the first aspect, in some implementations of the first aspect, the first message is a sidelink positioning protocol SLPP message.

With reference to the first aspect, in some implementations of the first aspect, that the first device sends the second message and the third message to the second device includes: The first device sends the second message to the second device, and the first device sends the third message to the second device after the first device sends the second message to the second device.

With reference to the first aspect, in some implementations of the first aspect, the second message is a sidelink positioning protocol SLPP message, and the third message is sidelink control information SCI.

With reference to the first aspect, in some implementations of the first aspect, the first information is the first measurement quantity, or the first information is a quantity determined based on the first measurement quantity.

According to a second aspect, a method for positioning is provided. The method may be performed by a second device, or may be performed by a component (for example, a chip or a circuit) of the second device. This is not limited in this application. For ease of description, the following uses an example in which the method is performed by the second device for description.

The method for positioning includes: The second device receives a first message from a first device, where the first message includes request information and indication information, the request information is used for requesting the second device to report a first measurement quantity, the first measurement quantity is used for determining a distance between the first device and the second device, and the indication information indicates that a first positioning reference signal is associated with a second positioning reference signal; or the second device receives a second message and a third message from a first device, where the second message includes the request information, and the third message includes the indication information; the second device measures the first positioning reference signal and the second positioning reference signal in response to the request information and the indication information, and obtains the first measurement quantity by measuring the first positioning reference signal and the second positioning reference signal; and the second device sends a response message to the first device, where the response message includes first information, a first identifier, and a second identifier, the first information indicates the first measurement quantity, the first identifier is an identifier of the first positioning reference signal, and the second identifier is an identifier of the second positioning reference signal.

Specifically, for descriptions related to the indication information, refer to the descriptions about the indication information in the first aspect. Details are not described herein again. In addition, for descriptions related to the request information, refer to the descriptions about the indication information in the first aspect. Details are not described herein again.

With reference to the second aspect, in some implementations of the second aspect, when the request information is further used for requesting the second device to report the second measurement quantity, the method further includes: The second device measures the fourth positioning reference signal and the fifth positioning reference signal in response to the request information and the indication information, and obtains the second measurement quantity by measuring the fourth positioning reference signal and the fifth positioning reference signal, where the response message further includes second information, a third identifier, and a fourth identifier, the second information indicates the second measurement quantity, the third identifier is an identifier of the fourth positioning reference signal, the fourth identifier is an identifier of the fifth positioning reference signal, the first measurement quantity corresponds to the first identifier and the second identifier, and the second measurement quantity corresponds to the third identifier and the fourth identifier.

For technical effects of the method shown in the second aspect and the possible designs of the second aspect, refer to the technical effects in the first aspect and the possible designs of the first aspect.

According to a third aspect, a first device is provided. The first device is configured to perform any one of the first aspect and the implementations of the first aspect. Specifically, the first device includes a processor and a memory. The memory is configured to store a computer program. The processor is configured to invoke the computer program from the memory and run the computer program, to enable the first device to perform any one of the first aspect and the implementations of the first aspect.

According to a fourth aspect, a second device is provided. The second device is configured to perform any one of the second aspect and the implementations of the second aspect. Specifically, the second device includes a processor and a memory. The memory is configured to store a computer program. The processor is configured to invoke the computer program from the memory and run the computer program, to enable the second device to perform any one of the second aspect and the implementations of the second aspect.

According to a fifth aspect, a communication apparatus is provided. The communication apparatus is configured to perform the method provided in any one of the first aspect and the second aspect and the implementations of the first aspect and the second aspect. Specifically, the communication apparatus may include units and/or modules (such as processing units and transceiver units) configured to perform the method provided in any one of the first aspect and the second aspect and the implementations of the first aspect and the second aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, this application provides a processor, configured to perform the methods provided in the first aspect and the second aspect.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a seventh aspect, a computer-readable storage medium is provided. The computer-readable storage medium stores a computer program. When the computer program runs on a communication apparatus, the communication apparatus is enabled to perform the method in any one of the implementations of the first aspect and the second aspect.

According to an eighth aspect, a computer program product including instructions is provided. When the computer program product runs on a computer, the computer is enabled to perform the method provided in any one of the implementations of the first aspect and the second aspect.

According to a ninth aspect, a chip is provided. The chip includes a processor and a communication interface. The processor reads instructions through the communication interface, to perform the method provided in any one of the implementations of the first aspect and the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect and the second aspect.

According to a tenth aspect, a communication system is provided. The communication system includes the first device in the third aspect and the second device in the fourth aspect.

According to an eleventh aspect, a method for positioning is provided. The method may be performed by a first device, or may be performed by a component (for example, a chip or a circuit) of the first device. This is not limited in this application. For ease of description, the following uses an example in which the method is performed by the first device for description.

The method for positioning includes: The first device sends a first message to a second device, where the first message includes request information and indication information, the request information is used for requesting the second device to report a first measurement quantity, the first measurement quantity is used for determining a distance between the first device and the second device, and the indication information indicates that a first positioning reference signal is associated with a second positioning reference signal; or the first device sends a second message and a third message to the second device, where the second message includes the request information, and the third message includes the indication information. The first information indicates the first measurement quantity, the first identifier is an identifier of the first positioning reference signal, the second identifier is an identifier of the second positioning reference signal, and the first measurement quantity is a measurement quantity obtained by the second device measuring the first positioning reference signal and the second positioning reference signal. The identifier may be a resource ID of a reference signal and/or timestamp information corresponding to the reference signal (for example, a slot and/or a symbol in which the reference signal is located). Details are not described below again.

Based on the foregoing technical solution, when initiating a measurement quantity reporting request (or after initiating a measurement quantity reporting request, or before initiating a measurement quantity reporting request), the first device may notify associated positioning reference signals by using the indication information, to indicate a measurement requirement.

According to a twelfth aspect, a method for positioning is provided. The method may be performed by a second device, or may be performed by a component (for example, a chip or a circuit) of the second device. This is not limited in this application. For ease of description, the following uses an example in which the method is performed by the second device for description.

The method for positioning includes: The second device receives a first message from a first device, where the first message includes request information and indication information, the request information is used for requesting the second device to report a first measurement quantity, the first measurement quantity is used for determining a distance between the first device and the second device, and the indication information indicates that a first positioning reference signal is associated with a second positioning reference signal; or the second device receives a second message and a third message from a first device, where the second message includes the request information, and the third message includes the indication information.

For descriptions related to the indication information in the eleventh aspect and the twelfth aspect, refer to related descriptions about the indication information in the first aspect. Details are not described herein again. For example, in the eleventh aspect and the twelfth aspect, the indication information includes a first identifier and a second identifier, the first identifier is an identifier of the first positioning reference signal, the second identifier is an identifier of the second positioning reference signal, and the first measurement quantity is a measurement quantity obtained by the second device by measuring the first positioning reference signal and the second positioning reference signal. For another example, in the eleventh aspect, the indication information includes information about a start moment of a time window, information about an end moment of the time window, and the like. For a detailed description, refer to related descriptions about the indication information in the first aspect.

In addition, for related descriptions of the request message, the second message, and the third message in the eleventh aspect and the twelfth aspect, refer to related descriptions of the request message, the second message, and the third message in the first aspect. Details are not described herein again.

According to a thirteenth aspect, a first device is provided. The first device is configured to perform any one of the eleventh aspect and the implementations of the eleventh aspect. Specifically, the first device includes a processor and a memory. The memory is configured to store a computer program. The processor is configured to invoke the computer program from the memory and run the computer program, to enable the first device to perform any one of the eleventh aspect and the implementations of the eleventh aspect.

According to a fourteenth aspect, a second device is provided. The second device is configured to perform any one of the twelfth aspect and the implementations of the twelfth aspect. Specifically, the second device includes a processor and a memory. The memory is configured to store a computer program. The processor is configured to invoke the computer program from the memory and run the computer program, to enable the second device to perform any one of the twelfth aspect and the implementations of the twelfth aspect.

According to a fifteenth aspect, a communication apparatus is provided. The communication apparatus is configured to perform the method provided in any one of the eleventh aspect and the twelfth aspect and the implementations of the eleventh aspect and the twelfth aspect. Specifically, the communication apparatus may include units and/or modules (such as processing units and transceiver units) configured to perform the method provided in any one of the eleventh aspect and the twelfth aspect and the implementations of the eleventh aspect and the twelfth aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixteenth aspect, this application provides a processor, configured to perform the methods provided in the eleventh aspect to the twelfth aspect.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a seventeenth aspect, a computer-readable storage medium is provided. The computer-readable storage medium stores a computer program. When the computer program runs on a communication apparatus, the communication apparatus is enabled to perform the method in any one of the implementations of the eleventh aspect and the twelfth aspect.

According to an eighteenth aspect, a computer program product including instructions is provided. When the computer program product runs on a computer, the computer is enabled to perform the method provided in any one of the implementations of the eleventh aspect and the twelfth aspect.

According to a nineteenth aspect, a chip is provided. The chip includes a processor and a communication interface. The processor reads instructions through the communication interface, to perform the method provided in any one of the implementations of the eleventh aspect and the twelfth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the eleventh aspect and the twelfth aspect.

According to a twentieth aspect, a communication system is provided. The communication system includes the first device in the thirteenth aspect and the second device in the fourteenth aspect.

## BRIEF DESCRIPTION OF DRAWINGS

FIG. 1 is a diagram of a scenario according to an embodiment of this application;
FIG. 2 is a diagram of an RTT positioning method;
FIG. 3 is a diagram of a DS-RTT positioning method;
FIG. 4 is a diagram of PRS sending in a general-form DS-RTT positioning method according to an embodiment of this application;
FIG. 5 is a diagram of a measurement quantity according to an embodiment of this application;
FIG. 6 is a schematic flowchart of a method for positioning according to an embodiment of this application;
FIG. 7 is a diagram of indicating a time window according to an embodiment of this application;
FIG. 8 is a diagram of a bitmap according to an embodiment of this application;
FIG. 9 is a diagram of associations of positioning reference signals according to an embodiment of this application;
FIG. 10 is a block diagram of a communication apparatus according to an embodiment of this application;
FIG. 11 is a diagram of another communication apparatus according to an embodiment of this application; and
FIG. 12 is a diagram of a chip system according to an embodiment of this application.

## DESCRIPTION OF EMBODIMENTS

The following describes technical solutions of this application with reference to accompanying drawings.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5G generation mobile communication system, or a new radio (new radio, NR) access technology. The technical solutions provided in this application may be further applied to a future communication system such as a $6^{th}$ generation mobile communication system.

Embodiments of this application may be applied to a terminal device. The terminal device may be a device that provides voice/data connectivity for a user, for example, a handheld device or a vehicle-mounted device with a wireless connection function; may be a device in internet of vehicles communication, for example, a communication terminal mounted on a vehicle or a roadside unit (roadside unit, RSU); may be a communication terminal mounted on an uncrewed aerial vehicle; or may be a terminal device in an internet of things (internet of things, IoT) system. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

For example, the terminal device includes but is not limited to: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), or the like. A specific form of the terminal device is not limited in embodiments of this application.

The technical solutions in embodiments of this application may be further applied to an access network device. The access network device may be a device that can connect a terminal device to a wireless network. The access network device may also be referred to as a radio access network (radio access network, RAN) node, a radio access network device, or a network device. For example, the access network device may be a base station.

The base station in this embodiment of this application may have various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a network-side device in a 6G network, a device that performs a function of a base station in a future communication system, or the like. The base station may support networks of a same access technology or different access technologies.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

A specific technology and a specific device form that are used by the access network device are not limited in embodiments of this application.

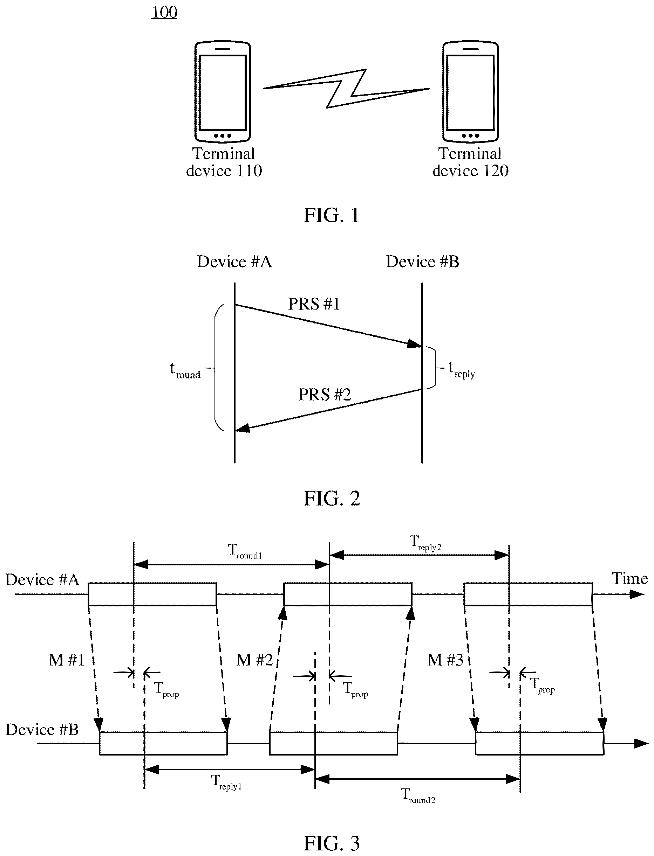

For ease of understanding embodiments of this application, FIG. 1 is first used as an example to describe an application scenario to which embodiments of this application are applicable.

FIG. 1 is a diagram of an application scenario 100 according to this application. As shown in FIG. 1, the application scenario 100 mainly relates to a sidelink positioning scenario, and a terminal device 110 and a terminal device 120 in FIG. 1 are terminal devices participating in positioning. For example, one of the terminal device 110 and the terminal device 120 is a to-be-positioned terminal device, and the other terminal device is an anchor terminal device. The terminal device 110 and the terminal device 120 may be common terminal devices such as mobile phones, or may be RSUs, or the like. Signals may be received and sent between the to-be-positioned terminal device and the anchor terminal device, and between the anchor terminal devices. Positioning measurement information may be reported to a location management function (location management function, LMF) (if any), a base station, or another device.

Specifically, a method for implementing positioning between the terminal device 110 and the terminal device 120 is described below with reference to a specific embodiment. Details are not described herein.

It should be understood that FIG. 1 shows only an example of the scenario to which the method for positioning provided in embodiments of this application can be applied, and does not constitute any limitation on the protection scope of this application. For example, the scenario shown in FIG. 1 may include at least two terminal devices, and any at least two terminal devices may be terminal devices participating in positioning. For another example, the scenario shown in FIG. 1 may further include a base station (for example, a gNB). For another example, the scenario shown in FIG. 1 may further include a positioning management device. Specifically, the positioning management device is a device on a network side and configured to determine positioning information of the terminal device. The positioning management device may be an LMF entity, an evolved serving mobile location center (evolved serving mobile location center, E-SMLC), or another device that may be configured to determine the positioning information of the terminal device.

Further, for ease of understanding of embodiments of this application, several basic concepts in embodiments of this application are briefly described.

1. Round-trip time (Round-Trip Time, RTT) positioning

According to an RTT positioning method, positioning is implemented by obtaining round-trip transmission time by sending positioning reference signals (positioning reference signals, PRSs) back and forth, without clock synchronization. Specifically, by sending reference signals back and forth between two devices, time of flight (time of flight, TOF) between the two devices may be obtained as follows:

$$\mathrm{TOF} = \frac{1}{2}\left(t_{round} - t_{reply}\right) \qquad (1\text{-}1)$$

$t_{round}$ represents a time interval between a moment at which one device participating in positioning sends a positioning reference signal and a moment at which the device participating in positioning receives a positioning reference signal; and $t_{reply}$ represents a time interval between a moment at which another device participating in positioning sends a positioning reference signal and a moment at which the device participating in positioning receives a positioning reference signal.

Further, a distance between the two devices may be obtained by multiplying the TOF by the speed of light. FIG. 2 is a diagram of an RTT positioning method.

It can be learned from FIG. 2 that PRSs are sent back and forth between devices participating in positioning (for example, a device #A and a device #B shown in FIG. 2), and a distance between the device #A and the device #B may be obtained.

2. Trilateration

It is a mathematical principle that two or more detectors are used to detect an orientation of a target in different positions, and then a position and a distance of the target are determined according to the triangular geometry principle.

According to the foregoing RTT positioning principle, distances from the to-be-positioned device to three base stations are obtained by separately performing an RTT process between the to-be-positioned device and the three base stations, and then trilateration may be performed. For example, an RTT process is performed between a to-be-positioned mobile device and three base stations separately. A base station #1 and the mobile device send a PRS #1 back and forth to obtain a distance #1 between the base station #1 and the mobile device; a base station #2 and the mobile device send a PRS #2 back and forth to obtain a distance #2 between the base station #2 and the mobile device; a base station #3 and the mobile device send a PRS #3 back and forth to obtain a distance #3 between the base station #3 and the mobile device, and then trilateration may be performed after the distances to the three base stations are obtained.

3. Clock drift phenomenon

The clock drift phenomenon refers to that an actual frequency of a crystal oscillator deviates from a nominal frequency, causing a deviation between time recorded by a device and actual time, and the deviation increases with increase of time. When the crystal oscillator has an error $e_1$, if actual time $t$ elapses, time recorded by the device is $t(1 + e_1)$. In other words, the deviation increases with the increase of time $t$.

Although the RTT solution does not require strict synchronization between devices, different devices cause different clock drifts, and it is assumed that in FIG. 2, the device #A has a clock crystal oscillator error $e_A$ and the device #B has a clock crystal oscillator error $e_B$, actual estimated TOF is:

$$\mathrm{TOF} = \frac{1}{2}\left(t_{round} - t_{reply}\right)$$

$$= \frac{1}{2}\left[\bar{t}_{round}(1 + e_A) - \bar{t}_{reply}(1 + e_B)\right]$$

$$= \overline{\mathrm{TOF}} + \frac{1}{2}\left(\bar{t}_{round} \cdot e_A - \bar{t}_{reply} \cdot e_B\right)$$

$$= \overline{\mathrm{TOF}} + \frac{1}{2}\bar{t}_{reply}(e_A - e_B) + \overline{\mathrm{TOF}} \cdot e_A \qquad (1\text{-}2)$$

The upper horizontal line in Equation (1-2) represents a true value.

Therefore, the estimated TOF has an error $\frac{1}{2}\bar{t}_{reply}(e_A - e_B) + \overline{\mathrm{TOF}} \cdot e_A$ compared to the true $\overline{\mathrm{TOF}}$. Because $e_A$ is usually in a level of $10^{-6}$, and the $\overline{\mathrm{TOF}}$ in an SL scenario is also usually in a nanosecond level, the error $\overline{\mathrm{TOF}} \cdot e_A$ is very small and may be ignored. However, $\bar{t}_{reply}$ is usually in a millisecond level, and therefore a nanosecond-level error (where a wireless signal may be transmitted 30 centimeters per nanosecond) may be introduced by $\frac{1}{2}\bar{t}_{reply}(e_A - e_B)$. Therefore, the RTT positioning solution generally requires response time to be as short as possible to reduce a positioning error. For example, to weaken impact of the clock drift, a double sided RTT (Double Sided RTT, DS-RTT) method is used to implement positioning in a current standard. The following describes the double sided RTT positioning method.

4. DS-RTT positioning method

Double sided RTT (Double Sided RTT, DS-RTT) is an extension of the RTT positioning method. In the DS-RTT positioning method, two round-trip time measurements are used and two pieces of round-trip time are combined to obtain the TOF ($T_{prop}$ shown in FIG. 3). In this way, high positioning accuracy is maintained even if the response time is long.

For ease of understanding, the following describes in detail how the high positioning accuracy is maintained in the DS-RTT positioning method.

It can be learned from FIG. 3 that, in the DS-RTT positioning method, three messages (M #1, M #2, and M #3 shown in FIG. 3) are transmitted between the device #A and the device #B in total. A 1st message and a 2nd message may be considered as RTT positioning measurement initiated by the device #A, and the 2nd message and a 3rd message may be considered as RTT positioning measurement initiated by the device #B.

Therefore, two RTT equations are obtained:

$$\begin{cases} T_{round1} = 2\text{TOF} + T_{reply1} \\ T_{round2} = 2\text{TOF} + T_{reply2} \end{cases} \qquad (1\text{-}3)$$

Specifically, the following derivation is performed on Equation (1-3) to obtain a TOF expression:

$$T_{round1} \times T_{round2} = (2\text{TOF} + T_{reply1})(2\text{TOF} + T_{reply2}) \qquad (1\text{-}4)$$

$$T_{round1} \times T_{round2} - T_{reply1} \times T_{reply2} = 4TOF^2 + 2TOF\big(T_{reply1} + T_{reply2}\big)$$

$$= TOF\big(4TOF + 2T_{reply1} + 2T_{reply2}\big)$$

$$= TOF\left(\big(2TOF + T_{reply1}\big) + \big(2TOF + T_{reply2}\big) + T_{reply1} + T_{reply2}\right)$$

$$= TOF(T_{round1} + T_{round2} + T_{reply1} + T_{reply2}) \qquad (1\text{-}5)$$

Therefore, Equation (1-4) and Equation (1-5) are combined to obtain the TOF:

$$\text{TOF} = \frac{T_{round1}*T_{round2} - T_{reply1}*T_{reply2}}{T_{round1} + T_{round2} + T_{reply1} + T_{reply2}} \qquad (1\text{-}6)$$

Considering that the device #A and the device #B have different clock crystal oscillator errors $e_A$ and $e_B$, actual time of flight obtained through measurement is:

$$\widehat{\text{TOF}} = \frac{\big(T_{round1}*T_{round2} - T_{reply1}*T_{reply2}\big)(1+e_A)(1+e_B)}{T_{round1}(1+e_A) + T_{round2}(1+e_B) + T_{reply1}(1+e_B) + T_{reply2}(1+e_A)}$$

$$= \frac{\big(T_{round1}*T_{round2} - T_{reply1}*T_{reply2}\big)(1+e_A)(1+e_B)}{\big(T_{round1} + T_{reply2}\big)(1+e_A) + \big(T_{round2} + T_{reply1}\big)(1+e_B)} \qquad (1\text{-}7)$$

Because $T_{round1} + T_{reply2} = T_{round2} + T_{reply1}$,

$$\widehat{\text{TOF}} = \frac{2\big(T_{round1}*T_{round2} - T_{reply1}*T_{reply2}\big)(1+e_A)(1+e_B)}{\big(T_{round1} + T_{reply2} + T_{round2} + T_{reply1}\big)(1+e_A + 1+e_B)}$$

$$= \frac{2(1+e_A)(1+e_B)}{2+e_A+e_B} TOF \qquad (1\text{-}8)$$

Therefore, finally, the error caused by the clock drift is:

$$Error = \widehat{\text{TOF}} - \text{TOF} = \frac{e_A+e_B+2e_ae_b}{2+e_A+e_B} TOF \approx \frac{e_A+e_B}{2} TOF \qquad (1\text{-}9)$$

Because $e_A + e_B$ is far less than 2, and $2e_ae_b$ is far less than $e_A + e_B$, there may be such an approximation. It can be learned from Equation (1-9) that the error is irrelevant to the response time, and is related only to $e_A$, $e_B$, and the TOF. Because $e_A$ and $e_B$ are generally in a level of $10^{-6}$, and TOF is in a nanosecond level, the error can be almost ignored. Therefore, high positioning accuracy can be maintained in the DS-RTT positioning method.

5. General-form DS-RTT

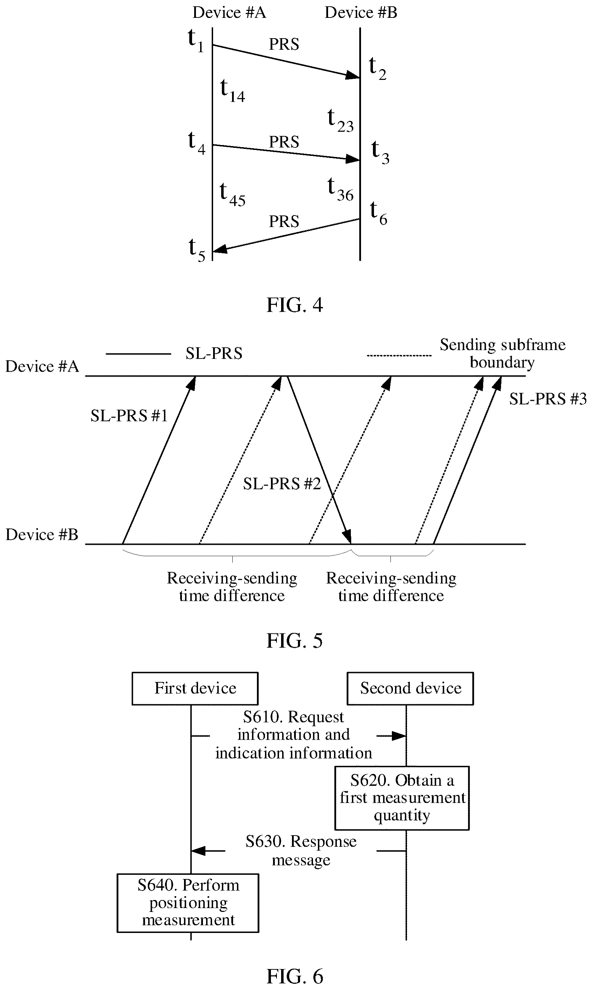

Specifically, the DS-RTT positioning may be extended to a more general form, and a sequence of the three PRSs may be adjusted flexibly. For example, the device #A sends two PRSs to the device #B, and the device #B sends one PRS to the device #A, as shown in FIG. 4.

$$\begin{cases} t_{14} = (1 + e_a)\bar{t}_{14} \\ t_{23} = (1 + e_b)\bar{t}_{23} \\ t_{45} = (1 + e_a)\bar{t}_{45} \\ t_{36} = (1 + e_b)\bar{t}_{36} \end{cases} \tag{1-10}$$

First, $\bar{t}_{14}$ needs to be equal to $\bar{t}_{23}$, and therefore

$$\frac{1 + e_a}{1 + e_b} = \frac{t_{14}}{t_{23}} \tag{1-11}$$

The foregoing equation indicates that a relationship between errors of two clock crystal oscillators can be obtained based on measurement quantities $t_{14}$ and $t_{23}$.

Next, the TOF may be calculated in a new manner by using the relationship:

$$TOF = \frac{1}{2}\left(t_{45} - \frac{t_{14}}{t_{23}}t_{36}\right) \tag{1-12}$$

$$= \frac{1}{2}\left(t_{45} - \frac{1 + e_a}{1 + e_b}t_{36}\right)$$

$$= \frac{1}{2}\left[(1 + e_a)\bar{t}_{45} - \frac{1 + e_a}{1 + e_b}(1 + e_b)\bar{t}_{36}\right]$$

$$= \frac{1}{2}(1 + e_a)(\bar{t}_{45} - \bar{t}_{36})$$

$$= (1 + e_a)\overline{TOF}$$

or

$$TOF = \frac{1}{2}\left(\frac{t_{23}}{t_{14}}t_{45} - t_{36}\right) \tag{1-13}$$

$$= \frac{1}{2}\left(\frac{1 + e_b}{1 + e_a}t_{45} - t_{36}\right)$$

$$= \frac{1}{2}\left[\frac{1 + e_b}{1 + e_a}(1 + e_a)\bar{t}_{45} - (1 + e_b)\bar{t}_{36}\right]$$

$$= \frac{1}{2}(1 + e_b)(\bar{t}_{45} - \bar{t}_{36})$$

$$= (1 + e_b)\overline{TOF}$$

It can be learned that errors obtained according to the two calculation equations (for example, Equation (1-12) and Equation (1-13)) are also irrelevant to the response time, and the impact of the clock drift can be effectively overcome.

6. Measurement quantity

A measurement quantity of an RTT method defined in a current 3GPP air interface communication scenario is a terminal device receive-transmit time difference (UE Rx-Tx time difference). To be specific, a receiving-sending time difference is: $T_{UE-RX} - T_{UE-TX}$, where $T_{UE-RX}$ is obtained by measuring a PRS, and $T_{UE-TX}$ is a used sending subframe boundary closest to the measured PRS (in other words, the terminal device may report the UE Rx-Tx time difference without actually sending the PRS).

However, because timing synchronization in an SL communication scenario may be adjusted, a synchronization error may be introduced in a manner of using the subframe boundary. Therefore, it is considered to modify the UE Rx-Tx time difference measurement quantity, and adjust $T_{UE\text{-}TX}$ to a moment at which the PRS is actually sent, for example, a moment at which a device #B actually sends an SL-PRS #1 or an SL-PRS #3 shown in FIG. 5, or a moment at which a device #A actually sends an SL-PRS #2 shown in FIG. 5.

In addition, the following descriptions are first provided to facilitate understanding of embodiments of this application.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information may be indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, terms such as "610" are merely identifiers for ease of description, and do not limit a sequence of performing steps.

Third, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

Fourth, "store" in embodiments of this application may mean "stored in one or more memories". The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, "of (of)", "corresponding/relevant (corresponding/relevant)", "corresponding (corresponding)", and "associate (associate)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the three is not emphasized, meanings to be expressed are consistent.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes, with reference to FIG. 1, the scenario to which the method for positioning provided in embodiments of this application can be applied, describes the basic concepts that may be used in embodiments of this application, and describes the concept of the measurement quantity in the basic concepts. In the descriptions of the measurement quantity in the foregoing basic concepts, the conventional UE Rx-Tx time difference measurement quantity is irrelevant to sending an SL-PRS, and is obtained by only measuring a received SL-PRS.

However, after a definition of the UE Rx-Tx time difference measurement quantity is modified, the measurement quantity needs to be associated with an actual sent SL-PRS and received SL-PRS. In addition, because general-form DS-RTT is introduced, the association relationship may be more diversified. Therefore, a positioning method is needed, so that a measurement requirement can be flexibly indicated when a measurement request is implemented. For example, in the case of the measurement quantity shown in FIG. 5, the conventionally defined device #A only needs to request the device #B to measure the SL-PRS #2. However, in the new definition, if the device #A only requests the device #B to measure the SL-PRS #2, the device #B may feed back a measurement result in which the SL-PRS #2 is associated with the SL-PRS #1, or a measurement result in which the SL-PRS #2 is associated with the SL-PRS #3, or both of the results. If the device #A attempts to implement positioning based on the DS-RTT, only the last one of the three cases can meet the requirement.

This application provides a method for positioning, to flexibly indicate a measurement requirement.

The following describes the technical solutions provided in this application in detail with reference to the accompanying drawings. Embodiments of this application may be applied to a plurality of different scenarios, including but not limited to the scenario shown in FIG. 1. For example, embodiments of this application may also be applied to an uplink (uplink) or downlink (downlink) positioning scenario in a cellular network.

It should be understood that a specific structure of an execution entity of a method provided in embodiments of this application is not particularly limited in the following embodiments, provided that a program that records code of the method provided in embodiments of this application is executable to perform communication according to the method provided in embodiments of this application. For example, the execution entity of the method provided in embodiments of this application may be a first device and a second device, or functional modules that can invoke and execute the program in the first device and the second device.

Without loss of generality, the following describes in detail a data transmission method provided in embodiments of this application by using interaction between the first device and the second device as an example. Both the first device and the second device in embodiments of this application may be terminal devices, or one of the first device and the second device may be a terminal device, and the other device is a base station, an LMF, or the like. Specific device types of the first device and the second device are not limited in the following embodiments, provided that functions of the first device and the second device can be executed.

FIG. 6 is a schematic flowchart of a method for positioning according to an embodiment of this application, including the following steps.

S610. A first device sends request information and indication information to a second device, or the second device receives the request information and the indication information from the first device.

Specifically, the request information is used for requesting the second device to report (or report) a first measurement (measurement) quantity, the first measurement quantity is used for determining a distance between the first device and the second device, and the indication information indicates that a first positioning reference signal is associated with a second positioning reference signal.

In a possible implementation, the first device may send the request information and the indication information to the second device by using a message. For example, the first device sends a first message to the second device, where the first message includes the request information and the indication information.

In this implementation, the first message may be high layer (high layer) signaling. For example, the first message is a sidelink positioning protocol (Sidelink Positioning Protocol, SLPP) message.

In another possible implementation, the first device may separately transmit the request information and the indication information by using different messages. For example, the first device sends a second message and a third message to the second device, where the second message includes the request information, and the third message includes the indication information.

In this implementation, the second message and the third message may be high layer signaling. For example, the second message and the third message are SLPP messages. Alternatively, the second message is high layer signaling, and the third message is low layer (low layer) signaling. For example, the second message is an SLPP message, and the third message is sidelink control information (Sidelink Control Information, SCI).

In addition, when the first device separately transmits the request information and the indication information by using the different messages, the first device may first send the second message to the second device, and then send the third message to the second device after sending the second message; or the first device may first send the third message to the second device, and then send the second message to the second device after sending the third message; or the first device may simultaneously send the second message and the third message to the second device. In this embodiment, a time sequence in which the first device sends the second message and the third message to the second device is not limited.

It should be noted that in the foregoing description, that the request information is used for requesting the second device to report the first measurement quantity is merely an example. In this embodiment, the first device may request, by using the request information, the second device to report at least one measurement quantity. The at least one measurement quantity is used for determining a position relationship between the first device and the second device.

For example, the measurement quantity is a time difference required for determining time of flight in an RTT positioning method. For another example, the measurement quantity is a phase difference.

The at least one measurement quantity corresponds to at least one positioning reference signal group received and sent by the second device, each measurement quantity is determined by the second device by measuring a received positioning reference signal and a sent positioning reference signal, and the indication information indicates that positioning reference signals in different positioning reference signal groups corresponding to different measurement quantities are associated.

In a possible implementation, the request information is further used for requesting the second device to report a second measurement quantity, the second measurement quantity is used for determining the distance between the first device and the second device, and the second measurement quantity is a measurement quantity obtained by the second device by measuring a fourth positioning reference signal and a fifth positioning reference signal; and the indication information further indicates that the fourth positioning reference signal is associated with the fifth positioning reference signal.

In another possible implementation, the measurement quantity that the first device requests the second device to report may be two measurement quantities corresponding to three PRSs in a DS-RTT scenario. For example, the request information is further used for requesting the second device to report a third measurement quantity, the third measurement quantity is used for determining the distance between the first device and the second device, and the third measurement quantity is a measurement quantity obtained by the second device by measuring the first positioning reference signal and a third positioning reference signal; and the indication information further indicates that the first positioning reference signal is associated with the third positioning reference signal.

For example, the request information is for requesting to report a measurement quantity #1, a measurement quantity #2, and a measurement quantity #3, where the measurement quantity #1 corresponds to a positioning reference signal group #1 received and sent by the second device, the measurement quantity #2 corresponds to a positioning reference signal group #2 received and sent by the second device, and the measurement quantity #3 corresponds to a positioning reference signal group #3 received and sent by the second device. Specifically, the positioning reference signal group #1 received and sent by the second device includes a positioning reference signal #1_1 received by the second device and a positioning reference signal #1_2 received by the second device, and the measurement quantity #1 is determined by the second device by measuring the received positioning reference signal #1_1 and the positioning reference signal #1_2 received by the second device. Similarly, the positioning reference signal group #2 received and sent by the second device includes a positioning reference signal #2_1 received by the second device and a positioning reference signal #2_2 received by the second device, and the measurement quantity #2 is determined by the second device by measuring the received positioning reference signal #2_1 and the positioning reference signal #2_2 received by the second device.

By way of example but not limitation, positioning reference signals included in a plurality of positioning reference signal groups that respectively correspond to a plurality of measurement quantities and that are received and sent by the second device may include a same positioning reference signal.

For example, in the foregoing example, the measurement quantity #1 corresponds to the positioning reference signal group #1 received and sent by the second device, the measurement quantity #2 corresponds to the positioning reference signal group #2 received and sent by the second device, and the measurement quantity #3 corresponds to the positioning reference signal group #3 received and sent by the second device, where the positioning reference signal #1_1 included in the positioning reference signal group #1, the positioning reference signal #2_1 included in the positioning reference signal group #2, and a positioning reference signal #3_1 included in the positioning reference signal group #3 may be a same positioning reference signal.

For ease of description, the following uses an example in which the request information is for requesting the second device to measure the first measurement quantity, and the indication information indicates that the first positioning reference signal is associated with the second positioning reference signal for description. The first measurement quantity is a measurement quantity obtained by the second device by measuring the first positioning reference signal and the second positioning reference signal, and the first measurement quantity is used for determining a position relationship between the first device and the second device. For example, the first measurement quantity is used for assisting in implementing positioning.

It should be understood that, in this embodiment, to enable the second device to determine the first measurement quantity obtained by measuring the first positioning reference signal and the second positioning reference signal, the first device indicates, by using the indication information, that the first positioning reference signal is associated with the second positioning reference signal.

For example, in this embodiment, the indication information may indicate, in the following several possible implementations, that the first positioning reference signal is associated with the second positioning reference signal.

Manner 1: The indication information explicitly carries an identifier of the positioning reference signal, to indicate that the first positioning reference signal is associated with the second positioning reference signal.

Specifically, the indication information includes a first identifier and a second identifier. The first identifier is an identifier of the first positioning reference signal, and the second identifier is an identifier of the second positioning reference signal. The identifier may be a resource ID of a reference signal and/or timestamp information corresponding to the reference signal (for example, a slot and/or a symbol in which the reference signal is located). In the case shown in Manner 1, the indication information may explicitly carry the identifier of the positioning reference signal, to notify the second device of the measurement requirement. The indication information carrying the first identifier and the second identifier is merely an example, and does not constitute any limitation on the protection scope of this application. The indication information may carry identifiers of a plurality of positioning reference signals, to indicate the second device to report different measurement quantities.

For example, the indication information includes an identifier of the positioning reference signal #1 and an identifier of the positioning reference signal #2, to indicate the second device to measure the positioning reference signal #1 and the positioning reference signal #2 to obtain and report the measurement quantity #1.

For another example, the indication information includes an identifier of the positioning reference signal #1, an identifier of the positioning reference signal #2, an identifier of the positioning reference signal #3, and an identifier of a positioning reference signal #4, where the positioning reference signal #1 is associated with the positioning reference signal #2, and the positioning reference signal #3 is associated with the positioning reference signal #4, to indicate the second device to measure the positioning reference signal #1 and the positioning reference signal #2 to obtain the measurement quantity #1, measure the positioning reference signal #3 and the positioning reference signal #4 to obtain the measurement quantity #2, and report.

For another example, the indication information includes an identifier of the positioning reference signal #1, an identifier of the positioning reference signal #2, and an identifier of the positioning reference signal #3, to indicate the second device to measure measurement quantities corresponding to all received and sent positioning reference signal groups that can be formed by the positioning reference signal #1, the positioning reference signal #2, and the positioning reference signal #3. For example, the positioning reference signal #1 and the positioning reference signal #2 form a received and sent positioning reference signal group, and correspond to the measurement quantity #1. The positioning reference signal #2 and the positioning reference signal #3 form a received and sent positioning reference signal group, and correspond to the measurement quantity #3.

For ease of understanding, with reference to a specific example, how the first device indicates the measurement requirement in the case shown in Manner 1 is described.

Example 1: In a scenario shown in FIG. 5, when requesting an Rx-Tx time difference measurement quantity, a device #A includes a PRS ID binding relationship, and the device #A may include an SL-PRS #2 ID and an SL-PRS #1 ID in a measurement request (for example, the foregoing first message), or include an SL-PRS #2 ID and an SL-PRS #3 ID, or include an SL-PRS #2 ID and an SL-PRS #1 ID, and the SL-PRS #2 ID and an SL-PRS #3 ID.

When the measurement request carries the SL-PRS #2 ID and the SL-PRS #1 ID, the second device is indicated to measure and report a time difference #1 between a moment at which the second device receives an SL-PRS #2 and a moment at which the second device sends an SL-PRS #1.

When the measurement request carries the SL-PRS #2 ID and the SL-PRS #3 ID, the second device is indicated to measure and report a time difference #2 between a moment at which the second device receives an SL-PRS #2 and a moment at which the second device sends an SL-PRS #3.

When the measurement request carries the SL-PRS #2 ID and the SL-PRS #1 ID, and the SL-PRS #2 ID and the SL-PRS #3 ID, the second device is indicated to measure and report a time difference #1 between a moment at which the second device receives an SL-PRS #2 and a moment at which the second device sends an SL-PRS #1, and a time difference #2 between the moment at which the second device receives the SL-PRS #2 and a moment at which the second device sends an SL-PRS #3.

In addition, it should be noted that, in Example 1, that the measurement quantity is a time difference is used as an example for description. The measurement quantity may alternatively be a phase difference, similar to the time difference. Details are not described herein again.

Example 5: In the scenario shown in FIG. 5, when requesting an Rx-Tx time difference measurement quantity, the device #A includes a PRS ID binding relationship, and the device #A may include a timestamp of an SL-PRS #2 and a timestamp of an SL-PRS #1 in a measurement request (for example, the foregoing first message), or include a timestamp of an SL-PRS #2 and a timestamp of an SL-PRS #3, or include a timestamp of an SL-PRS #2 and a timestamp of an SL-PRS #1, and the timestamp of the SL-PRS #2 and a timestamp of an SL-PRS #3.

When the measurement request carries the timestamp of the SL-PRS #2 and the timestamp of the SL-PRS #1, the second device is indicated to measure and report a time difference #1 between a moment at which the second device receives the SL-PRS #2 and a moment at which the second device sends the SL-PRS #1.

When the measurement request carries the timestamp of the SL-PRS #2 and the timestamp of the SL-PRS #3, the second device is indicated to measure and report a time difference #2 between a moment at which the second device receives the SL-PRS #2 and a moment at which the second device sends the SL-PRS #3.

When the measurement request carries the timestamp of the SL-PRS #2 and the timestamp of the SL-PRS #1, and the timestamp of the SL-PRS #2 and the timestamp of the SL-PRS #3, the second device is indicated to measure and report a time difference #1 between a moment at which the second device receives the SL-PRS #2 and a moment at which the second device sends the SL-PRS #1, and a time difference #2 between the moment at which the second device receives the SL-PRS #2 and a moment at which the second device sends the SL-PRS #3.

In addition, it should be noted that, in Example 1, the SL-PRS is indicated by using the resource ID, and in Example 5, the SL-PRS is indicated by using the timestamp. The two manners may alternatively be combined to indicate the SL-PRS. For example, the timestamp of the SL-PRS #1 and the SL-PRS #2 ID are carried to indicate the second device to measure and report the time difference #1 between the moment at which the second device receives the SL-PRS #2 and the moment at which the second device sends the SL-PRS #1.

Manner 2: The indication information indicates, by indicating a time window, that the first positioning reference signal is associated with the second positioning reference signal.

Specifically, the indication information includes information about a start moment of the time window and information about an end moment (or a termination moment) of the time window, the first positioning reference signal is one of at least one positioning reference signal received by the second device in the time window, and the second positioning reference signal is one of at least one positioning reference signal sent by the second device in the time window.

In the case shown in Manner 2, the second device may measure and report measurement quantities corresponding to all received and sent positioning reference signal groups in the time window.

For example, the indication information includes information about a start moment #1 and information about a termination moment #1, and the second device measures and reports measurement quantities corresponding to all received and sent positioning reference signal groups in a time range from the start moment #1 to the termination moment #1.

For ease of understanding, with reference to a specific example, how the first device indicates the measurement requirement in the case shown in Manner 2 is described.

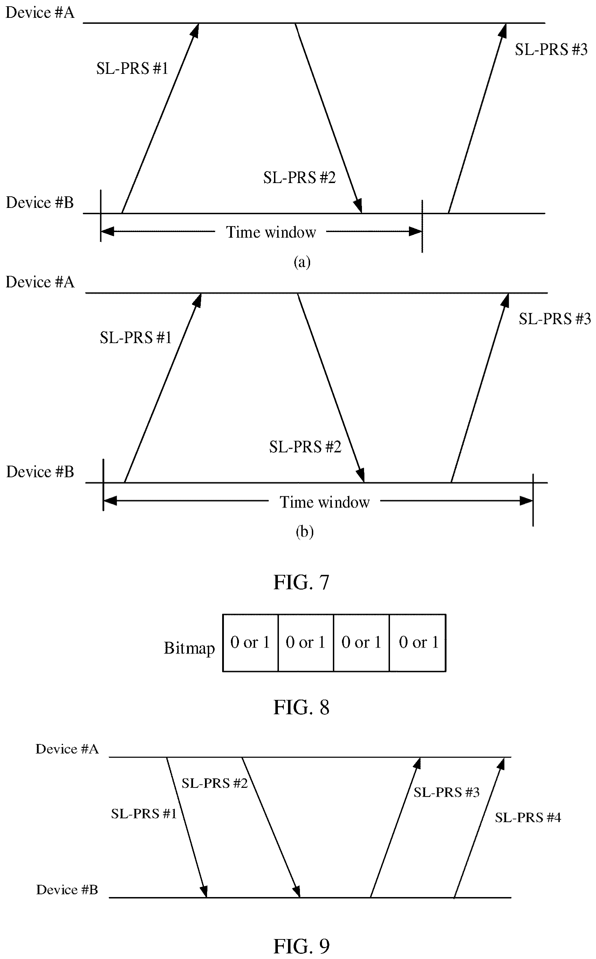

Example 2: An example in which the measurement quantity is a time difference is used, as shown in (a) and (b) in FIG. 7. When the time window indicated by the indication information is a time window shown in section (a) in FIG. 7, the indication information may indicate the second device to measure and report a time difference #1 between a moment at which the second device receives an SL-PRS #2 and a moment at which the second device sends an SL-PRS #1.

When the time window indicated by the indication information is a time window shown in section (b) in FIG. 7, the indication information may indicate the second device to measure and report a time difference #1 between a moment at which the second device receives an SL-PRS #2 and a moment at which the second device sends an SL-PRS #1, and a time difference #2 between the moment at which the second device receives the SL-PRS #2 and a moment at which the second device sends an SL-PRS #3.

Manner 3: The indication information indicates, by carrying an identifier of the first positioning reference signal and a bitmap, that the first positioning reference signal is associated with the second positioning reference signal.

Specifically, the indication information includes a first identifier and a bitmap, the bitmap includes a first bit, and the first bit corresponds to the second positioning reference signal. When the second positioning reference signal is associated with the first positioning reference signal, the first bit is a first value.

The first bit may be one or more bits. For example, the first bit is one bit. When the first bit is 0, it indicates that the second positioning reference signal is associated with the first positioning reference signal, and when the first bit is 1, it indicates that the second positioning reference signal is not associated with the first positioning reference signal; or when the first bit is 1, it indicates that the second positioning reference signal is associated with the first positioning reference signal, and when the first bit is 0, it indicates that the second positioning reference signal is not associated with the first positioning reference signal.

In the case shown in Manner 2, the indication information may indicate, by carrying the bitmap, an association relationship between the first positioning reference signal and a different positioning reference signal, so that a measurement requirement can be flexibly indicated while signaling overheads are reduced. For example, the bitmap further includes a second bit, the second bit corresponds to the third positioning reference signal, and the second bit indicates whether the third positioning reference signal is associated with the first positioning reference signal.

For ease of understanding, with reference to a specific example, how the first device indicates the measurement requirement in the case shown in Manner 3 is described.

Example 3: An example in which the measurement quantity is a time difference is used, and the indication information carries an identifier (assuming that the identifier is marked as SL-PRS #0) of the first positioning reference signal and a bitmap, where the bitmap is a bitmap shown in FIG. 8, the bitmap includes four bits, a 1st bit represents a 2nd SL-PRS sent by the second device before the SL-PRSO is sent, and a 2nd bit represents a 1st SL-PRS sent by the second device before the SL-PRSO is sent, a 3rd bit represents a 1st SL-PRS sent by the second device after the SL-PRSO is sent, and a 4th bit represents a 2nd SL-PRS sent by the second device after the SL-PRSO is sent. Optionally, if a bit value is 1, it indicates to establish a binding relationship, in other words, an Rx-Tx time difference needs to be measured. If a bit value is 0, it indicates not to establish a binding relationship, in other words, an Rx-Tx time difference does not need to be measured.

For a scenario shown in FIG. 9, if the indication information includes a bitmap: 0010 when a device #A sends an SL-PRS #1, and the indication information includes a bitmap: 0011 when the device #A sends an SL-PRS #2, a device #B may be indicated to measure and report, when sending an SL-PRS #3, a time difference between a moment at which the second device receives the SL-PRS #1 and a moment at which the second device sends the SL-PRS #3, and a time difference between a moment at which the second device receives the SL-PRS #2 and the moment at which the second device sends the SL-PRS #3. Further, the device #B may be indicated to measure and report, when sending an SL-PRS #4, a time difference between the moment at which the second device receives the SL-PRS #2 and a moment at which the second device sends the SL-PRS #4.

It should be understood that, regardless of whether the request information and the indication information are transmitted by using a same message or two different messages, the indication information may be in a form of several different implementations shown in the foregoing manners 1 to 3.

Further, in this embodiment, after the second device receives the request information and the indication information, in response to the request information and the indication information, the second device measures associated reference signals, and the method procedure shown in FIG. 6 further includes the following steps.

S620. The second device obtains the first measurement quantity.

Specifically, the second device measures the first positioning reference signal and the second positioning reference signal in response to the request information and the indication information, and obtains the first measurement quantity by measuring the first positioning reference signal and the second positioning reference signal.

In a possible implementation, the first measurement quantity is a time difference between a first moment and a second moment, the first moment is a moment at which the second device receives the first positioning reference signal, and the second moment is a moment at which the second device sends the second positioning reference signal.

In this implementation, that the second device measures the positioning reference signals to obtain the measurement quantity is: The second device measures the first moment at which the second device receives the first positioning reference signal and the second moment at which the second device sends the second positioning reference signal, and further obtains the first measurement quantity through calculation based on the first moment and the second moment.

For example, first measurement quantity=first moment-second moment; or for another example, first measurement quantity=|first moment-second moment|, where ‖ represents taking an absolute value.

In another possible implementation, the first measurement quantity is a phase difference between a first phase and a second phase, the first phase is a phase at which the second device receives the first positioning reference signal, and the second phase is a phase at which the second device sends the second positioning reference signal.

In this implementation, that the second device measures the positioning reference signals to obtain the measurement quantity includes: The second device measures the first phase at which the second device receives the first positioning reference signal and the second phase at which the second device sends the second positioning reference signal, and further obtains the first measurement quantity through calculation based on the first phase and the second phase.

For example, first measurement quantity=first phase-second phase; or for another example, first measurement quantity=|first phase-second phase|, where ‖ represents taking an absolute value.

After measuring the associated positioning reference signals to obtain the measurement quantity, the second device may report a measurement result by using a response message. The method procedure shown in FIG. 6 further includes the following steps.

S630. The second device sends the response message to the first device, or the first device receives the response message from the second device.

The response message includes first information, the first identifier, and the second identifier, the first information indicates the first measurement quantity, the first identifier is the identifier of the first positioning reference signal, and the second identifier is the identifier of the second positioning reference signal.

For example, the first information is the first measurement quantity, or the first information is a quantity determined based on the first measurement quantity.

Optionally, the first information is the first measurement quantity obtained by the second device through measurement. For example, the first information is a measurement quantity obtained through measurement such as first moment-second moment, or |first moment-second moment|, or first phase-second phase, or |first phase-second phase|.

Optionally, the first information is a quantity obtained by processing the first measurement quantity that is obtained by the second device through measurement. For example, the first information is a part of a time difference (first moment-second moment, or |first moment-second moment|) obtained by the second device through measurement. For example, the time difference obtained by the second device through measurement is 10.25 ms, and generally, an integer part of the time difference may be determined based on configured received and sent PRS resource positions. Therefore, the second device may report only a fractional part of the time difference obtained through measurement, that is, 0.25 ms. For another example, the first information is a part of a phase difference (first phase-second phase, or |first phase-second phase|) obtained by the second device through measurement. For example, the phase difference obtained by the second device through measurement is $\frac{5}{2}\pi$ , and generally, a received and sent PRS phase difference does not exceed $2\pi$. Therefore, the second device determines to report only a value of a part of the phase difference obtained through measurement greater than $2\pi$, that is, report $\frac{1}{2}\pi$ .

In a possible implementation, it can be learned from the foregoing descriptions of the request information and the indication information that the request information may be further used for requesting the second device to report the second measurement quantity, and the indication information further indicates that the fourth positioning reference signal is associated with the fifth positioning reference signal. In this implementation, the response message further includes second information, a third identifier, and a fourth identifier, the second information indicates the second measurement quantity, the third identifier is an identifier of the fourth positioning reference signal, the fourth identifier is an identifier of the fifth positioning reference signal, the first measurement quantity corresponds to the first identifier and the second identifier, and the second measurement quantity corresponds to the third identifier and the fourth identifier.

In another possible implementation, it can be learned from the foregoing descriptions of the request information and the indication information that the request information may be further used for requesting the second device to report the third measurement quantity, and the indication information further indicates that the first positioning reference signal is associated with a third positioning reference signal. In this implementation, the response message further includes third information, the first identifier, and a fifth identifier, the third information indicates the third measurement quantity, the first identifier is the identifier of the first positioning reference signal, the fifth identifier is an identifier of the third positioning reference signal, the first measurement quantity corresponds to the first identifier and the second identifier, and the third measurement quantity corresponds to the first identifier and the fifth identifier.

In conclusion, in this embodiment, the second device may report, by using the response message, at least one measurement quantity obtained through measurement and an identifier of a positioning reference signal corresponding to each measurement.

Optionally, the response message may be an SLPP message.

For example, the second device includes a list (for example, an nr-SL-RTT measurement list (nr-SL-RTT-MeasList)) in the SLPP message (for example, NR-SL-RTT signal measurement information (NR-SL-RTT-SignalMeasurementInformation)), where the list may include a plurality of measurement results (for example, NR-SL-RTT measurement elements (NR-SL-RTT-MeasElements)), and each NR-SL-RTT-MeasElement carries two PRS IDs (for example, a 1st PRS ID indicates an ID of a sent PRS corresponding to the measurement result, and a 2nd PRS ID indicates an ID of a received PRS corresponding to the measurement result) and a corresponding Rx-Tx time difference measurement result, and/or each NR-SL-RTT-MeasElement carries two timestamps (for example, a 1st timestamp represents a slot and/or a symbol of a sent PRS corresponding to the measurement result, and a 2nd timestamp represents a slot and/or a symbol of a received PRS corresponding to the measurement result).

For ease of understanding, content included in the response message sent by the second device is described with reference to a specific example.

Example 4: For the foregoing Example 3, when the device #A sends the SL-PRS #1, the indication information includes the bitmap: 0010, and when the device #A sends the SL-PRS #2, the indication information includes the bitmap: 0011. An nr-SL-RTT-MeasList reported by the second device carries three measurement quantities: A 1st NR-SL-RTT-MeasElement carries an SL-PRS #3 ID (or a timestamp), an SL-PRS #1 ID (or a timestamp), and a corresponding Rx-Tx time difference, a 2nd NR-SL-RTT-MeasElement carries an SL-PRS #3 ID (or a timestamp), an SL-PRS #2 ID (or a timestamp), and a corresponding Rx-Tx time difference, and a 3rd NR-SL-RTT-MeasElement carries an SL-PRS #4 ID (or a timestamp), an SL-PRS #2 ID (or a timestamp), and a corresponding Rx-Tx time difference.

Further, after receiving the response message of the second device, the first device may perform positioning measurement based on the information reported by the second device. The method procedure shown in FIG. 6 further includes the following steps.

S640. The first device performs positioning measurement.

Specifically, after receiving the measurement quantity of the second device, the first device may implement positioning measurement by using the measurement quantity obtained by the first device through measurement.

For example, for the foregoing Example 4, after receiving the measurement quantity of the second device, the first device may implement two DS-RTT by using the measurement quantity obtained by the first device through measurement, to implement positioning measurement.

PRSs in one DS-RTT include an SL-PRS #1, an SL-PRS #2, and an SL-PRS #3. A received and sent PRS time difference of the first device may be measured by the first device, and a received and sent PRS time difference of the second device is carried in the response message (for example, the 1st NR-SL-RTT-MeasElement carried in the response message shown in Example 4 carries the SL-PRS #3 ID, the SL-PRS #1 ID, and the corresponding Rx-Tx time difference, and the 2nd NR-SL-RTT-MeasElement carries the SL-PRS #3 ID, the SL-PRS #2 ID, and the corresponding Rx-Tx time difference).

PRSs in the other DS-RTT include an SL-PRS #2, an SL-PRS #3, and an SL-PRS #4. A received and sent PRS time difference of the first device may be measured by the first device, and a received and sent PRS time difference of the second device is carried in the response message (for example, the 2nd NR-SL-RTT-MeasElement carried in the response message shown in Example 4 carries the SL-PRS #3 ID, the SL-PRS #2 ID, and the corresponding Rx-Tx time difference, and the 3rd NR-SL-RTT-MeasElement carries the SL-PRS #4 ID, the SL-PRS #2 ID, and the corresponding Rx-Tx time difference).

It should be understood that, in this embodiment, how the first device performs positioning measurement after receiving the measurement result of the second device is not limited. For details, refer to descriptions about performing positioning based on a measurement quantity in a current positioning-related solution. Details are not described herein again.

This application further provides another method for positioning. In the method for positioning, only how the first device flexibly indicates a measurement requirement may be concerned (in other words, only content related to step S610 in FIG. 6 may be included), and how the second device responds to a request after receiving the request is not limited (in other words, content related to steps S620 to S640 in FIG. 6 may not be described in detail). This embodiment is not further described in detail. For a detailed description, refer to the descriptions of step S610 in FIG. 6. Details are not described herein again.

It may be understood that the examples in FIG. 6 in embodiments of this application are merely intended to help a person skilled in the art understand embodiments of this application, but are not intended to limit embodiments of this application to a specific scenario shown in the examples. A person skilled in the art can definitely make various equivalent modifications or changes based on the example in FIG. 6, and such modifications or changes also fall within the scope of embodiments of this application. For example, the second device may send a measurement result (that is, a response message) to another device (for example, an LMF or a base station), and the device performs positioning. For another example, positioning is mainly used as an example for description. However, in another scenario (for example, ranging or sensing) in which the foregoing measurement quantity needs to be obtained, this embodiment of this application may also be applied.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the devices (for example, the first device and the second device) may alternatively be implemented by a component (for example, a chip or a circuit) of the device.

It may be further understood that in embodiments of this application, interaction between the first device and the second device is mainly used as an example for description. This application is not limited thereto. The first device may be replaced with a receive end device, and the receive end device may be a terminal device. The second device may be replaced with a transmit end device, and the transmit end device may be a terminal device. For example, the "first device" may be replaced with a "first terminal device", and the "second device" may be replaced with a "second terminal device".

It may be further understood that, some optional features in embodiments of this application may be independent of other features in some scenarios, or may be combined with other features in some scenarios. This is not limited.

The above describes in detail the method for positioning provided in embodiments of this application with reference to FIG. 6. The foregoing method for positioning is mainly described from a perspective of interaction between the first device and the second device. It may be understood that to implement the foregoing functions, the first device and the second device include corresponding hardware structures and/or software modules for performing the functions.

A person skilled in the art should be aware that, with reference to units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation exceeds the scope of this application.

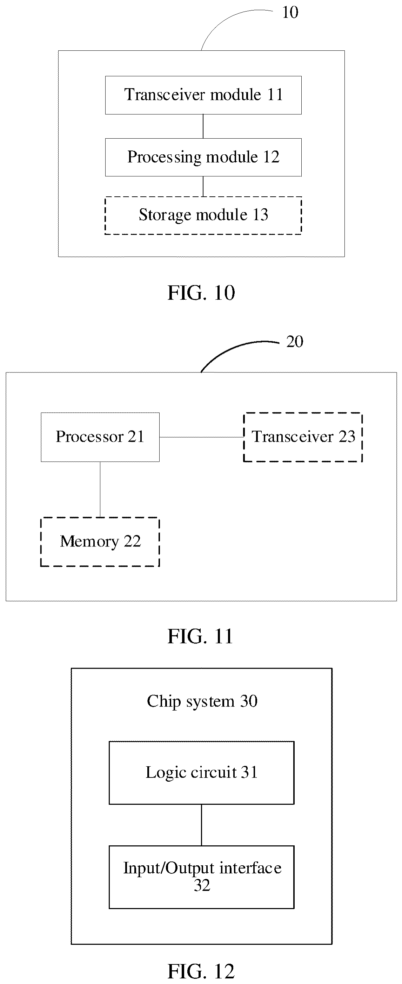

The following describes in detail apparatuses for positioning provided in embodiments of this application with reference to FIG. 10 to FIG. 12. It should be understood that descriptions of apparatus embodiments correspond to the descriptions of the method embodiments. Therefore, for content that is not described in detail, refer to the method embodiments above. For brevity, details of a part of content are not described herein again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 10 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending-related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the first device in the foregoing method embodiments, or may be a component (for example, a chip) of the first device.

The apparatus 10 may implement a corresponding step or procedure performed by the first device in the foregoing method embodiments. The transceiver module 11 may be configured to perform receiving and sending-related operations of the first device in the foregoing method embodiments. The processing module 12 may be configured to perform processing-related operations of the first device in the foregoing method embodiments.

In a possible implementation, the transceiver module 11 is configured to send a first message to a second device, where the first message includes request information and indication information, the request information is used for requesting the second device to report a first measurement quantity, the first measurement quantity is used for determining a distance between the first device and the second device, and the indication information indicates that a first positioning reference signal is associated with a second positioning reference signal. Alternatively, the transceiver module 11 is configured to send a second message and a third message to the second device, where the second message includes the request information, and the third message includes the indication information. The transceiver module 11 is further configured to receive a response message from the second device, where the response message includes first information, a first identifier, and a second identifier, the first information indicates the first measurement quantity, the first identifier is an identifier of the first positioning reference signal, the second identifier is an identifier of the second positioning reference signal, and the first measurement quantity is a measurement quantity obtained by the second device by measuring the first positioning reference signal and the second positioning reference signal.

When the apparatus 10 is configured to perform the method in FIG. 6, the transceiver module 11 may be configured to perform steps of receiving and sending information in the method, for example, step S610 and step S630; and the processing module 12 may be configured to perform a processing step in the method, for example, step S640.

It should be understood that a specific process in which the units perform the foregoing corresponding steps is described in detail in the foregoing method embodiments, and for brevity, details are not described herein.

In another first design, the apparatus 10 may correspond to the second device in the foregoing method embodiments, or may be a component (for example, a chip) of the second device.

The apparatus 10 may implement a corresponding step or procedure performed by the second device in the foregoing method embodiments. The transceiver module 11 may be configured to perform receiving and sending-related operations of the second device in the foregoing method embodiments. The processing module 12 may be configured to perform processing-related operations of the second device in the foregoing method embodiments.

In a possible implementation, the transceiver module 11 is configured to receive a first message from a first device, where the first message includes request information and indication information, the request information is used for requesting a second device to report a first measurement quantity, the first measurement quantity is used for determining a distance between a first device and the second device, and the indication information indicates that a first positioning reference signal is associated with a second positioning reference signal. Alternatively, the transceiver module 11 is configured to receive a second message and a third message from a first device, where the second message includes the request information, and the third message includes the indication information. The processing module 12 is configured to measure the first positioning reference signal and the second positioning reference signal in response to the request information and the indication information, and obtain the first measurement quantity by measuring the first positioning reference signal and the second positioning reference signal. The transceiver module 11 is further configured to send a response message to the first device, where the response message includes first information, a first identifier, and a second identifier, the first information indicates the first measurement quantity, the first identifier is an identifier of the first positioning reference signal, and the second identifier is an identifier of the second positioning reference signal.

When the apparatus 10 is configured to perform the method in FIG. 6, the transceiver module 11 may be configured to perform steps of receiving and sending information in the method, for example, step S610 and step S630; and the processing module 12 may be configured to perform a processing step in the method, for example, step S620.

It should be understood that a specific process in which the units perform the foregoing corresponding steps is described in detail in the foregoing method embodiments, and for brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the network device in the foregoing embodiments, and may be configured to perform procedures and/or steps corresponding to the network device in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the terminal device or the network device) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 11 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 11, the apparatus 20 further includes a memory 22, and the memory 22 is configured to store a computer program or instructions and/or data. The memory 22 may be integrated with the processor 21, or the memory 22 and the processor 21 may be disposed separately. Optionally, there are one or more memories 22.

Optionally, as shown in FIG. 11, the apparatus 20 further includes a transceiver 23, and the transceiver 23 is configured to receive and/or send a signal. For example, the processor 21 is configured to control the transceiver 23 to receive and/or send the signal.

As a solution, the apparatus 20 is configured to implement operations performed by the first device or the second device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (a storage module) may be integrated into the processor.

It should further be noted that the memory described herein is intended to include, but is not limited to, these and any other appropriate type of memory.

FIG. 12 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

As a solution, the chip system 30 is configured to implement operations performed by the first device and the second device in the foregoing method embodiments.

For example, the logic circuit 31 is configured to implement processing-related operations performed by the terminal device in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the method performed by the first device and the second device in the foregoing method embodiments.

An embodiment of this application further provides a computer program product, including instructions. When the instructions are executed by a computer, the method performed by the first device or the second device in the foregoing method embodiments is implemented.

An embodiment of this application further provides a communication system, including the foregoing first device and the foregoing second device.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for positioning, comprising:

   sending a first message, wherein the first message comprises request information and indication information, the request information is used for requesting a second device to report a first measurement quantity, the first measurement quantity is used for determining a distance between a first device and the second device, and the indication information indicates that a first positioning reference signal is associated with a second positioning reference signal; or
   sending a second message and a third message to a second device, wherein the second message comprises request information, and the third message comprises indication information; and
   receiving a response message, wherein the response message comprises first information, a first identifier, and a second identifier, the first information indicates the first measurement quantity, the first identifier is an identifier of the first positioning reference signal, the second identifier is an identifier of the second positioning reference signal, and the first measurement quantity is a measurement quantity obtained by the second device by measuring the first positioning reference signal and the second positioning reference signal.

2. The method according to claim 1, wherein the indication information comprises the first identifier and the second identifier.

3. The method according to claim 1, wherein the indication information comprises information about a start moment of a time window and information about an end moment of the time window, the first positioning reference signal is one of at least one positioning reference signal received by the second device in the time window, and the second positioning reference signal is one of at least one positioning reference signal sent by the second device in the time window.

4. The method according to claim 1, wherein the indication information comprises the first identifier and a bitmap, the bitmap comprises a first bit, and the first bit corresponds to the second positioning reference signal; and
   when the second positioning reference signal is associated with the first positioning reference signal, the first bit is a first value.

5. The method according to claim 4, wherein the bitmap further comprises a second bit, the second bit corresponds to a third positioning reference signal, and the second bit indicates whether the third positioning reference signal is associated with the first positioning reference signal.

6. The method according to any one of claims 1 to 5, wherein the request information is further used for requesting the second device to report a second measurement quantity, the second measurement quantity is used for determining the distance between the first device and the second device, and the second measurement quantity is a measurement quantity obtained by the second device by measuring a fourth positioning reference signal and a fifth positioning reference signal; and
   the indication information further indicates that the fourth positioning reference signal is associated with the fifth positioning reference signal.

7. The method according to claim 6, wherein the response message further comprises second information, a third identifier, and a fourth identifier, the second information indicates the second measurement quantity, the third identifier is an identifier of the fourth positioning reference signal, and the fourth identifier is an identifier of the fifth positioning reference signal, wherein
   the first measurement quantity corresponds to the first identifier and the second identifier, and the second measurement quantity corresponds to the third identifier and the fourth identifier.

8. The method according to any one of claims 1 to 7, wherein the first measurement quantity is a time difference between a first moment and a second moment, or the first measurement quantity is a phase difference between a first phase and a second phase, wherein
   the first moment is a moment at which the second device receives the first positioning reference signal, the second moment is a moment at which the second device sends the second positioning reference signal, the first phase is a phase at which the second device receives the first positioning reference signal, and the second phase is a phase at which the second device sends the second positioning reference signal.

9. The method according to any one of claims 1 to 8, wherein the first message is a sidelink positioning protocol SLPP message.

10. The method according to any one of claims 1 to 9, wherein sending the second message and the third message comprises:
   sending the second message, and sending the third message after sending the second message.

11. The method according to any one of claims 1 to 10, wherein the second message is a sidelink positioning protocol SLPP message, and the third message is sidelink control information SCI.

12. The method according to any one of claims 1 to 11, wherein the first information is the first measurement quantity, or the first information is a quantity determined based on the first measurement quantity.

13. A method for positioning, comprising:

   receiving a first message, wherein the first message comprises request information and indication information, the request information is used for requesting a second device to report a first measurement quantity, the first measurement quantity is used for determining a distance between a first device and the second device, and the indication information indicates that a first positioning reference signal is associated with a second positioning reference signal; or
   receiving a second message and a third message, wherein the second message comprises request information, and the third message comprises indication information;
   measuring the first positioning reference signal and the second positioning reference signal in response to the request information and the indication information, and obtaining the first measurement quantity by measuring the first positioning reference signal and the second positioning reference signal; and
   sending a response message, wherein the response message comprises first information, a first identifier, and a second identifier, the first information indicates the first measurement quantity, the first identifier is an identifier of the first positioning reference signal, and the second identifier is an identifier of the second positioning reference signal.

14. The method according to claim 13, wherein the indication information comprises the first identifier and the second identifier.

15. The method according to claim 13, wherein the indication information comprises information about a start moment of a time window and information about an end moment of the time window, the first positioning reference signal is one of at least one positioning reference signal received in the time window, and the second positioning reference signal is one of at least one positioning reference signal sent in the time window.

16. The method according to claim 13, wherein the indication information comprises the first identifier and a bitmap, the bitmap comprises a first bit, and the first bit corresponds to the second positioning reference signal; and
   when the second positioning reference signal is associated with the first positioning reference signal, the first bit is a first value.

17. The method according to claim 16, wherein the bitmap further comprises a second bit, the second bit corresponds to a third positioning reference signal, and the second bit indicates whether the third positioning reference signal is associated with the first positioning reference signal.

18. The method according to any one of claims 13 to 17, wherein the request information is further used for requesting the second device to report a second measurement quantity, the second measurement quantity is used for determining the distance between the first device and the second device, and the second measurement quantity is a measurement quantity obtained by the second device by measuring a fourth positioning reference signal and a fifth positioning reference signal; and
   the indication information further indicates that the fourth positioning reference signal is associated with the fifth positioning reference signal.

**19.** The method according to claim 18, wherein the method further comprises:

measuring the fourth positioning reference signal and the fifth positioning reference signal in response to the request information and the indication information, and obtaining the second measurement quantity by measuring the fourth positioning reference signal and the fifth positioning reference signal, wherein
the response message further comprises second information, a third identifier, and a fourth identifier, the second information indicates the second measurement quantity, the third identifier is an identifier of the fourth positioning reference signal, the fourth identifier is an identifier of the fifth positioning reference signal, the first measurement quantity corresponds to the first identifier and the second identifier, and the second measurement quantity corresponds to the third identifier and the fourth identifier.

**20.** The method according to any one of claims 13 to 19, wherein the first measurement quantity is a time difference between a first moment and a second moment, or the first measurement quantity is a phase difference between a first phase and a second phase, wherein
the first moment is a moment at which the second device receives the first positioning reference signal, the second moment is a moment at which the second device sends the second positioning reference signal, the first phase is a phase at which the second device receives the first positioning reference signal, and the second phase is a phase at which the second device sends the second positioning reference signal.

**21.** The method according to any one of claims 13 to 20, wherein the first message is a sidelink positioning protocol SLPP message.

**22.** The method according to any one of claims 13 to 21, wherein receiving the second message and the third message comprises:
receiving the second message, and receiving the third message after receiving the second message.

**23.** The method according to any one of claims 13 to 22, wherein the second message is a sidelink positioning protocol SLPP message, and the third message is sidelink control information SCI.

**24.** The method according to any one of claims 13 to 23, wherein the first information is the first measurement quantity, or the first information is a quantity determined based on the first measurement quantity.

**25.** An apparatus, configured to implement the method according to any one of claims 1 to 12.

**26.** The apparatus according to claim 25, wherein the apparatus comprises a first device or a chip.

**27.** An apparatus, configured to implement the method according to any one of claims 13 to 24.

**28.** The apparatus according to claim 27, wherein the apparatus comprises a second device or a chip.

**29.** A computer-readable storage medium, wherein the computer-readable storage medium stores computer instructions, and when the computer instructions are run, the method according to any one of claims 1 to 12 is implemented; or when the computer instructions are run, the method according to any one of claims 13 to 24 is implemented.

**30.** A computer program product, comprising instructions, wherein when the instructions are run, the method according to any one of claims 1 to 12 is implemented; or when the computer instructions are run, the method according to any one of claims 13 to 24 is implemented.

100

Terminal
device 110

Terminal
device 120

FIG. 1

Device #A    Device #B

PRS #1

$t_{round}$    $t_{reply}$

PRS #2

FIG. 2

FIG. 3

Device #A          Device #B

$t_1$ ┤                              ├ 
         PRS
$t_{14}$                              ┤ $t_2$

                    $t_{23}$

$t_4$ ┤                              ├ 
         PRS
$t_{45}$              $t_{36}$           ┤ $t_3$

                                    ┤ $t_6$
         PRS
$t_5$ ┤

FIG. 4

———— SL-PRS                ·········· Sending subframe
                                              boundary
Device #A

SL-PRS #1                                              SL-PRS #3

                    SL-PRS #2

Device #B

⎨_____⎬    ⎨_____⎬
Receiving-sending      Receiving-sending
time difference          time difference

FIG. 5

| First device | | Second device |
|---|---|---|
| | S610. Request information and indication information → | |
| | | S620. Obtain a first measurement quantity |
| ← S630. Response message | | |
| S640. Perform positioning measurement | | |

FIG. 6

Device #A

SL-PRS #1

SL-PRS #3

SL-PRS #2

Device #B

Time window

(a)

Device #A

SL-PRS #1

SL-PRS #3

SL-PRS #2

Device #B

Time window

(b)

FIG. 7

| Bitmap | 0 or 1 | 0 or 1 | 0 or 1 | 0 or 1 |
|---|---|---|---|---|

FIG. 8

Device #A

SL-PRS #2

SL-PRS #3

SL-PRS #1

SL-PRS #4

Device #B

FIG. 9

10

| Transceiver module 11 |
| Processing module 12 |
| Storage module 13 |

FIG. 10

20

| Processor 21 | | Transceiver 23 |

| Memory 22 |

FIG. 11

Chip system 30

| Logic circuit 31 |

| Input/Output interface 32 |

FIG. 12

**INTERNATIONAL SEARCH REPORT**

| International application No. |
| --- |
| **PCT/CN2024/075121** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: RTT, 双, 多, 双边, 二者, 两者, 一对, 测距, 测量, 定位, 关联, 相关, 绑定, 请求, 指示, 双边, 往返, double, ID+, measurement, PRS, SCI, SLPP, pair+, measure+, double-sided RTT, double+, requir+, indicat+, DS-RTT, SL RTT, request+, associat+, resource ID

**C. DOCUMENTS CONSIDERED TO BE RELEVANT**

| Category* | Citation of document, with indication, where appropriate, of the relevant passages | Relevant to claim No. |
| --- | --- | --- |
| A | MODERATOR(VIVO). "R1-2301950 Summary #1 on Measurements and Reporting for SL positioning" *3GPP TSG RAN WG1 #112*, 03 March 2023 (2023-03-03), sections 3.1.2, 3.1.4, 4.1.1, 4.1.5, and 4.2.3 | 1-30 |
| A | MODERATOR(INTEL CORP.). "R1-2108288 Summary of the Preparation Phase for Rel.16 NR Positioning Maintenance" *3GPP TSG RAN WG1 #106e*, 27 August 2021 (2021-08-27), entire document | 1-30 |
| A | WO 2022227030 A1 (QUALCOMM INC.) 03 November 2022 (2022-11-03) entire document | 1-30 |
| A | CN 114222931 A (BEIJING XIAOMI MOBILE SOFTWARE CO., LTD.) 22 March 2022 (2022-03-22) entire document | 1-30 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **29 April 2024** | **08 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2022227030 | A1 | 03 November 2022 | KR | 20240000496 | A | 02 January 2024 |
| | | | | BR | 112023021704 | A2 | 26 December 2023 |
| | | | | EP | 4331288 | A1 | 06 March 2024 |
| | | | | CN | 117204063 | A | 08 December 2023 |
| CN | 114222931 | A | 22 March 2022 | WO | 2023087150 | A1 | 25 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310296316
- CN 202310389602X
- CN 202310541796